**Europäisches Patentamt**

**European Patent Office**

**Office européen des brevets**

(19)

(11) Veröffentlichungsnummer: **0 009 124**
**A1**

(12) # EUROPÄISCHE PATENTANMELDUNG

(21) Anmeldenummer: 79103019.0

(22) Anmeldetag: 17.08.79

(51) Int. Cl.³: **H 04 Q 11/04,** H 04 Q 1/02

(30) Priorität: 27.09.78 DE 2842098

(43) Veröffentlichungstag der Anmeldung: 02.04.80
**Patentblatt 80/7**

(84) Benannte Vertragsstaaten: **AT CH FR GB IT NL SE**

(71) Anmelder: **SIEMENS AKTIENGESELLSCHAFT Berlin
und München, Postfach 22 02 61, D-8000
München 22 (DE)**

(72) Erfinder: **Lechner, Robert, Dipl.-Ing., Haidfeldstrasse 5,
D-8156 Otterfing (DE)**
Erfinder: **Monat, Hermann, Bognerweg 15, D-8031
Wessling (DE)**

(54) **Anordnung für Teilnehmerschaltungen von digitalen Zeitmultiplex-Fernmeldeanlagen, insbesondere von PCM-Ortsvermittlungsstellen.**

(57) Teilnehmerschaltungen, die zum Anschluß von analog betriebenen Teilnehmerleitungen an digitale Koppelfelder bestimmt sind, besitzen den einzelnen Teilnehmerleitungen individuell zugeordnete analoge Schaltungsteile sowie Schaltungen zur Kodierung bzw. Dekodierung der Signale. Einer Mehrzahl derartiger Teilnehmerschaltungen sind digitale Steuer- und Schnittstellenschaltungen gemeinsam zugeordnet. Erfindungsgemäss sind die einer Untergruppe von Teilnehmerleitungen zugeordneten analogen Schaltungsteile und Schaltungen zur Kodierung und Dekodierung zu Unterbaugruppen (21) zusammengefaßt, die auf einer gemeinsamen Trägerplatte (19) im Abstand von deren Hauptebene angeordnet sind, wobei diese Trägerplatte den Schaltungsträger für die Leiterbahnen und Bauelemente (20, 23) der rein digital arbeitenden übrigen Schaltungen bildet.

- 1 -

SIEMENS AKTIENGESELLSCHAFT     Unser Zeichen
Berlin und München             VPA **78 P 6 2 2 9** EUR

Anordnung für Teilnehmerschaltungen von digitalen Zeitmultiplex-Fernmeldeanlagen, insbesondere von PCM-Ortsvermittlungsstellen.

Die Erfindung betrifft eine Anordnung für Teilnehmerschaltungen von digitalen Zeitmultiplex-Fernmeldeanlagen, insbesondere von PCM-Ortsvermittlungsstellen.

Die Vorteile digitaler Übertragungs- und Vermittlungssysteme sind allgemein bekannt. Die Fortschritte der
Mikroelektronik lassen in absehbarer Zukunft eine sogenannte Volldigitalisierung der Vermittlungssysteme als
möglich erscheinen, d.h. eine Übertragungs- und Vermittlungstechnik, bei der die Umwandlung analoger Nachrichtensignale unmittelbar in den Teilnehmerendgeräten erfolgt. Im gegenwärtigen Zeitpunkt jedoch erscheinen derartige volldigitalisierte Systeme noch zu kostenaufwendig. Hingegen stehen teildigitalisierte Systeme unmittelbar vor der allgemeinen Einführung. Bei diesen werden
die bestehenden Teilnehmerleitungen und Teilnehmerendgeräte unverändert analog betrieben. Die Digitalisierung

Wf 1 Gru / 22.9.1978

der analogen Nachrichten- und Steuersignale findet bei diesen teildigitalisierten Systemen an den Mündungsstellen der individuellen Teilnehmerleitungen, d.h. den Teilnehmerschaltungen, statt. Die Teilnehmerschaltungen bilden also die Schnittstellen zwischen Analog- und Digitalteil des Systems.

Es stellt sich hierbei das Problem, die im allgemeinen als steckbare Flachbaugruppen ausgebildeten Schaltungsträger für die Teilnehmerschaltungen so zu gestalten, daß bei der vergleichsweise großen "Packungsdichte" der Bauelemente die erforderlichen Prüf- und Abgleicharbeiten der analogen Schaltungsteile mit vertretbarem Aufwand durchgeführt werden können. Bisher wurde versucht, durch eine geschickte Auflösung der Leiterplatte der Flachbaugruppe einen zufriedenstellenden Kompromiß zwischen den einander zum Teil wiedersprechenden Forderungen zu erzielen. Besonderes Augenmerk ist dabei den durch die hohe Packungsdichte auftretenden thermischen Problemen zu widmen.

Der Erfindung liegt die Aufgabe zugrunde, eine Anordnung für Teilnehmerschaltungen von digitalen Zeitmultiplex-Fernmeldeanlagen zu schaffen, die eine besonders einfache Prüfung und einen besonders einfachen Abgleich der betreffenden Schaltungsteile ermöglicht, und bei der die erwähnten thermischen Probleme zufriedenstellend gelöst sind.

Ausgehend von einer Anordnung für Teilnehmerschaltungen zum Anschluß von Teilnehmerleitungen mit analoger Signalübertragung an digitale Koppelfelder, mit den Teilnehmerleitungen individuell zugeordneten analogen Schaltungsteilen (z.B. Anpassungs-, Abgleich- und Speiseschaltungen, mit Schaltungen zur Umwandlung der von den Teilnehmerendgeräten ausgehenden Nachrichtensignale in digitale Signale (Kodierung) bzw. zur Umwandlung der für die Teilnehmerendgeräte bestimmten digitalen Signale in über die Teilnehmerleitung zu übertragende Nachrichtensignale (Dekodierung), wobei jede dieser Schaltungen zur Kodierung und Dekodierung einer Untergruppe von Teilnehmerleitungen gemeinsam zugeordnet ist, deren Anzahl (z. B. 2) durch das Produkt aus der dem Zeitmultiplex-System zugrundeliegenden Abtastfrequenz (z.B. 8 kHz) und der für Kodierung und Dekodierung insgesamt erforderlichen Wandlungs- und Übergabezeit (z.B. 62, 5 Mikrosekunden) begrenzt ist, ferner mit einer Indikationsschaltung zur Umsetzung von auf der Teilnehmerleitung auftretenden Steuersignalen (z.B. Schleifenschluß und Wählinformationen) in entsprechende logische Indikationssignale, wobei diese Indikationsschaltung einer aus einer Mehrzahl (z.B. 8) der genannten Untergruppen bestehenden Gruppe von Teilnehmerleitungen gemeinsam zugeordnet ist, sowie mit digitalen Schnittstellenschaltungen zur Ankopplung der digitalisierten Nachrichten- und Indikationssignale an entsprechende Zeitmultiplexübertragungswege, wird die der Erfindung zugrunde liegende Aufgabe dadurch gelöst, daß die genannten den einzelnen Untergruppen von Teilnehmerleitungen zugeordneten analogen Schaltungsteile sowie die betreffende Schaltung zur Kodierung und Dekodierung mechanisch jeweils zu einer flachen im wesentlichen ebenen Subbaugruppe zusammengefaßt sind, daß alle Subbaugruppen einer Gruppe von Teilnehmerleitungen auf einer gemeinsamen Trägerplatte im Abstand von deren Hauptebene angeordnet sind und daß diese Trägerplatte unmittelbar den Schaltungsträger für die gedruckten Leiterbahnen und Bauelemente der genannten digitalen Schnittstellenschaltungen bildet.

Durch diese Anordnung ergeben sich folgende Vorteile:

Die analoge Signale führenden Leitungen können optimal

0009124

an die bestehenden elektrischen Forderungen z.B. bezüglich der Stoßspannungsfestigkeit, des Nebensprechens und des Signal-Rauschabstandes angepaßt werden, da die räumliche Anordnung der internen Verbindungen der analogen Schaltungsteile nicht durch die Leitungsführung auf der gemeinsamen Trägerplatte beeinträchtigt ist.

Die Prüfung und der Abgleich der analogen Schaltungsteile kann an einfachen Prüf- und Einstellautomaten für Einzel- und Summenabgleich erfolgen, während die auf der gemeinsamen Trägerplatte angeordnete digitale Schaltung abhängig hiervon auf Logikprüfautomaten getestet werden kann. Hieraus ergeben sich eine beträchtliche Reduzierung des Prüfaufwandes und eine entsprechende Kostenverringerung.

Die Anordnung der Subbaugruppen im Abstand von der Hauptebene der gemeinsamen Trägerplatte vergrößert die Gesamtoberfläche der Teilnehmerschaltungsbaugruppe, sodaß sich eine wesentlich günstigere Wärmeverteilung und damit eine Erniedrigung der Betriebstemperatur ergeben, wodurch die zu erwartende Lebensdauer der Bauelemente ansteigt.

Da die analogen Schaltungsteile einerseits und die gemeinsame digitale Schaltung andererseits durch die Bildung der Subbaugruppen leicht voneinander trennbar sind, ist eine Anpassung an unterschiedliche übertragungstechnische Erfordernisse z.B. bezüglich des Übertragungspegels, der Nachbildung für unterschiedliche Typen von Teilnehmerendgeräten und unterschiedliche Einsatzfälle durch individuellen Abgleich einheitlich vorgefertigter Subbaugruppen unter Beibehaltung der die digitale Schaltung beinhaltenden gemeinsamen Trägerplatte leicht realisierbar.

Schließlich ermöglicht die Anordnung gemäß der Erfindung in einfacher Weise eine Erweiterung bestehender Anlagen unmittelbar am Standort der Anlage und erleichtert infolge der Auswechselbarkeit der Subbaugruppen die Fehlerbehebung bei der Wartung der Anlage.

Vorteilhafte Weiterbildungen der Erfindung sind in den Unteransprüchen beschrieben. Einer dieser Unteransprüche beinhaltet das Merkmal, daß auch die einer Gruppe von Teilnehmerleitungen gemeinsam zugeordnete Indikationsschaltung zur Umsetzung von auf den Teilnehmerleitungen auftretenden Steuersignalen in entsprechende logische Indikationssignale auf einer Subbaugruppe angeordnet ist. Diese Maßnahme bringt den Vorteil mit sich, daß diese Indikationsschaltung, die unter Umständen kundenspezifischen Anforderungen genügen muß, vollkompatibel ist. Ein weiterer Vorteil besteht darin, daß auch diese Subbaugruppe unabhängig von der Gesamtschaltung vor ihrem Einsatz separat geprüft werden kann.

Im folgenden sei die Erfindung anhand der Zeichnungen näher erläutert:

Fig. 1 zeigt das Blockschaltbild der einer Untergruppe von Teilnehmerleitungen zugeordneten analogen Schaltungsteile sowie die dieser Untergruppe gemeinsam zugeordnete Schaltung zur Kodierung und Dekodierung,

Fig. 2 veranschaulicht das Zusammenwirken der in Fig. 1 dargestellten Schaltung mit den übrigen Schaltungsteilen der Teilnehmerschaltung,

Fig. 3 zeigt ein Ausführungsbeispiel der Erfindung, bei dem die in Fig. 1 dargestellten Schaltungsteile für jede Untergruppe von Teilnehmerleitungen mechanisch zu einer Subbaugruppe zusammengefaßt und diese Subbaugruppen auf einer Trägerplatte im Abstand von deren Hauptebene angeordnet sind.

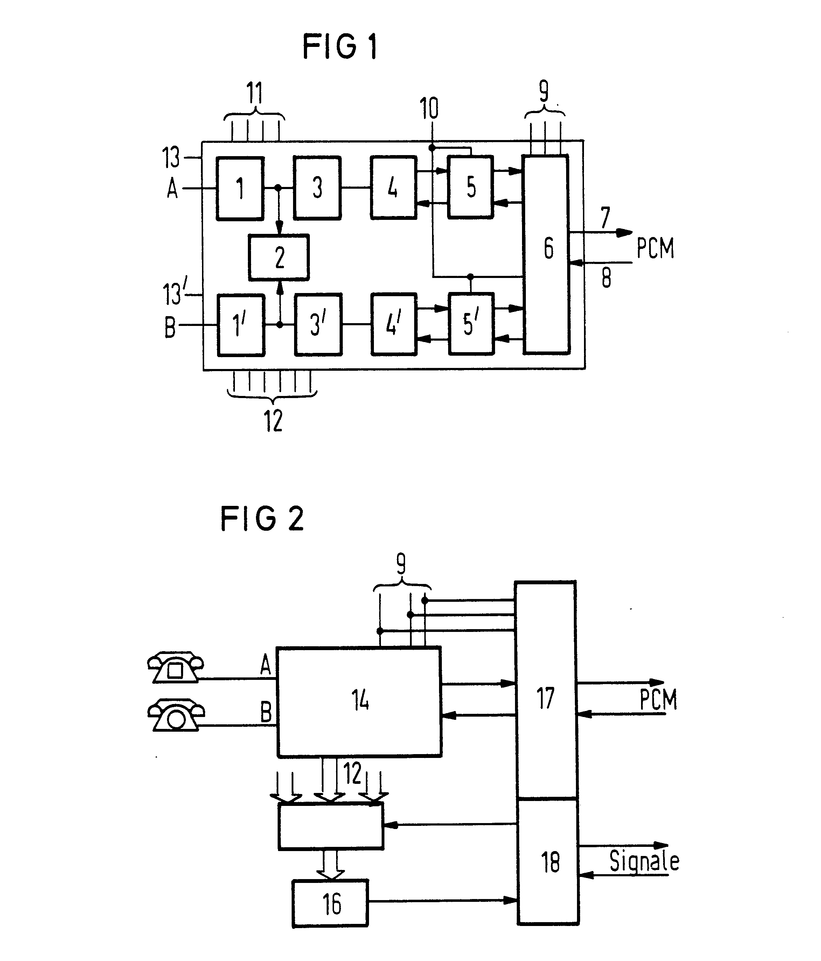

Die in Fig. 1 dargestellte Schaltung dient zum unmittelbarem Anschluß von Teilnehmerleitungen A bzw. B. Kunstleitungen 1 bzw. 1' zur Anpassung der unterschiedlichen Leitungslängen der einzelnen Teilnehmerleitungen dienen zur Reduzierung der Speiseverlustleistung. Ein Überspannungsschutz 2 hält auf den Teilnehmerleitungen auftretende Spannungsspitzen von den empfindlichen nachgeordneten elektronischen Bauelementen fern. Weiter ist jeder Teilnehmerleitung eine individuelle Speiseschaltung 3 bzw. 3' sowie eine Gabelschaltung 4 bzw. 4' zugeordnet. Jede dieser Gabelschaltungen 4 bzw. 4' führt zu einer Filterschaltung 5 bzw. 5'. In einer Schaltung 6 zur Kodierung und Dekodierung werden die von den an die Teilnehmerleitungen angeschlossenen Teilnehmerendgeräten ausgehenden analogen Nachrichtensignale in PCM-Signale umgewandelt und über 7 an den PCM-Übertragungsweg weitergegeben. Über 8 ankommende PCM-Signale werden in der Schaltung 6 dekodiert, d.h. in für die Teilnehmerendgeräte bestimmte analoge Nachrichtensignale zurückgewandelt. Die Schaltung 6 wird über Leitungen 9 gesteuert, über die Takt- und Synchronisiersignale zugeführt werden. Über eine Leitung 10 wird ein Steuersignal zur Verringerung der Ruheverlustleistung zugeführt. Über Leitungen 11 werden der Schaltung die erforderlichen Betriebsspannungen zugeführt. Die Leitungen 12 führen zu dem in Fig. 2 dargestellten Analogmultiplexer und von dort zu einer Indikationsschaltung zur Auswertung der auf den Teilnehmerleitungen auftretenden Steuersignale. Leitungen 13 und 13' schließlich bilden die Anschlüsse für die Rufsignale der Teilnehmerendgeräte.

Die Schaltung 6 zur Kodierung und Dekodierung ist einer Untergruppe von Teilnehmerleitungen, im vorliegenden Fall zwei Teilnehmerleitungen gemeinsam zugeordnet. Die Anzahl der Teilnehmerleitungen, die von einer derartigen Schaltung 6 "bedient" werden können, ist durch das Produkt aus der dem PCM-System zugrunde liegenden Abtastfrequenz und der für die Kodierung und Dekodierung insgesamt erforderlichen Wandlungs- und Übergabezeit gegeben. Im vorliegenden Fall beträgt die Abtastfrequenz 8 kHz, während die genannte Wandlungs- und Übergabezeit 62,5 Mikrosekunden dauert. Das Produkt aus beiden Werten ist gleich 2, d.h. an eine der Schaltungen 6 zur Kodierung und Dekodierung können zwei Teilnehmerleitungen angeschlossen werden.

In Fig. 2 ist die in Fig. 1 dargestellte Schaltung als Block 14 eingezeichnet. Dem bereits erwähnten Analogmultiplexer 15 werden die Indikationssignale der Schaltung 14 sowie einerMehrzahl gleichartiger Schaltungen zugeführt. In einer Indikationsschaltung 16 werden diese Signale in entsprechende logische Signale umgewandelt. Die Schaltung 14 steht über eine Schnittstellenschaltung 17 für die Nachrichtensignale mit dem PCM-Übertragungsweg in Verbindung. Eine weitere Schnittstellenschaltung 18 verbindet den Analogmultiplexer 15 und die Schnittstellenschaltung 16 mit einem Übertragungsweg für die Steuersignale.

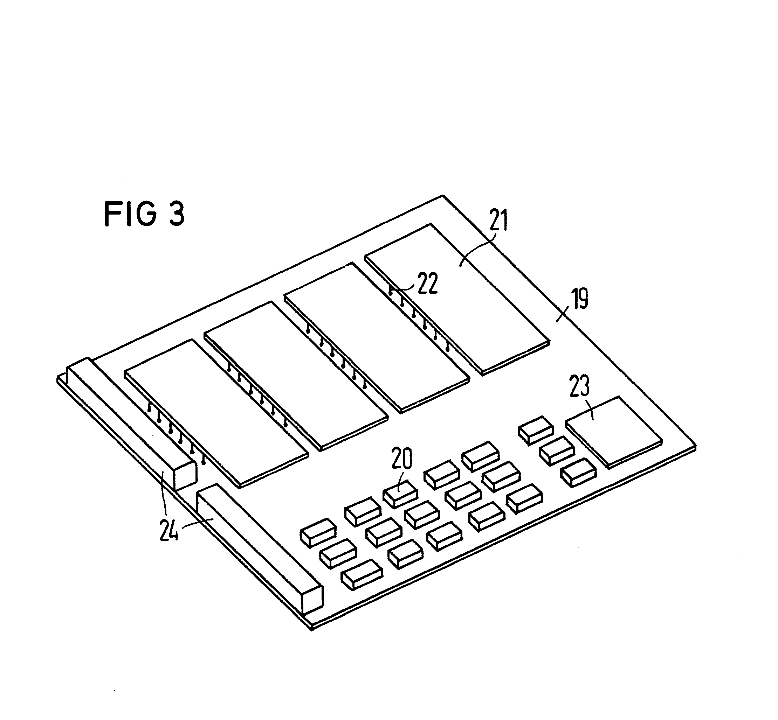

Fig. 3 zeigt in schematischer perspektivischer Darstellung eine Einschub-Flachbaugruppe zur Realisierung der in Fig. 2 dargestellten Schaltung. Die Baugruppe besitzt eine Grundplatte 19, die den Schaltungsträger für die digitalen Schaltungsteile von Fig. 2 bildet. Sie ist vorzugsweise als gedruckte Leiterplatte ausgebildet und an ihrer Oberseite mit Bauelementen 20 zur Realisierung der digitalen Schaltungsabschnitte bestückt. Ferner befinden sich auf der Grundplatte 19 vier Subbaugruppen 21, die jeweils die analogen Schaltungsteile sowie die Schaltung zur Kodierung und Dekodierung für eine Untergruppe von Teilnehmerleitungen beinhaltet. Diese Subbaugruppen 21 sind im Abstand von der Hauptebene der Grundplatte 19 angeordnet. Der Trägerkörper der als Hybrid-
Schaltungen ausgebildeten Subbaugruppen ist beispielsweise ein keramisches Substrat. Die elektrische und mechanische Verbindung der Subbaugruppen 21 an der Grundplatte 19 erfolgt über Lötstifte 22, die auch den genannten Abstand zwischen den beiden Ebenen gewährleisten.
Der Analogmultiplexer und die Indikationsschaltung sind
ebenfalls als Subbaugruppe 23 ausgebildet. Steckverbinderleisten 24 dienen zur elektrischen Verbindung der
Baugruppe mit der Verdrahtung eines Gerätegestells.

3 Patentansprüche
3 Figuren

Patentansprüche

1. Anordnung für Teilnehmerschaltungen von digitalen Zeitmultiplex-Fernmeldeanlagen, insbesondere von PCM-Ortsvermittlungsstellen, zum Anschluß von Teilnehmerleitungen mit analoger Signalübertragung an digitale Koppelfelder, mit den Teilnehmerleitungen individuell zugeordneten analogen Schaltungsteilen (z.B. Anpassungs-, Abgleich- und Speiseschaltungen), mit Schaltungen zur Umwandlung der von den Teilnehmerendgeräten ausgehenden Nachrichtensignale in digitale Signale (Kodierung) bzw. zur Umwandlung von für die Teilnehmerendgeräte bestimmten digitalen Signalen in über die Teilnehmerleitung zu übertragende Nachrichtensignale (Dekodierung), wobei jede dieser Schaltungen zur Kodierung und Dekodierung einer Untergruppe von Teilnehmerleitungen gemeinsam zugeordnet ist, deren Anzahl (z.B. 2) durch das Produkt aus der dem Zeitmultiplexsystem zugrunde liegenden Abtastfrequenz (z.B. 8 kHz) und der für Kodierung und Dekodierung insgesamt erforderlichen Wandlungs- und Übergabezeit (z.B. 62,5 Mikrosekunden) begrenzt ist, ferner mit einer Indikationsschaltung zur Umsetzung von auf den Teilnehmerleitungen auftretenden Steuersignalen (z.B. Schleifenschluß und Wählinformationen) in entsprechende logische Indikationssignale, wobei diese Indikationsschaltung einer aus einer Mehrzahl (z.B. 4) der genannten Untergruppen bestehenden Gruppe von Teilnehmerleitungen gemeinsam zugeordnet ist, sowie mit digitalen Schnittstellenschaltungen zur Ankopplung der digitalisierten Nachrichten- und Indikationssignale an entsprechende Zeitmultiplex-Übertragungswege, d a d u r c h  g e k e n n z e i c h n e t , daß die genannten den einzelnen Untergruppen von Teilnehmerleitungen (A, B) zugeordneten analogen Schaltungsteile (1, 2, 3, 4, 5) sowie die betreffende Schaltung (6) zur Kodierung und Dekodierung mechanisch jeweils zu einer flachen im we-

0009124

sentlichen ebenen Subbaugruppe (21) zusammengefaßt sind, daß alle Subbaugruppen (21) einer Gruppe von Teilnehmerleitungen auf einer gemeinsamen Trägerplatte (19) im Abstand von deren Hauptebene angeordnet sind und daß diese Trägerplatte (19) unmittelbar den Schaltungsträger für die gedruckten Leiterbahnen und Bauelemente (20) der genannten digitalen Schnittstellenschaltungen bildet.

2. Anordnung nach Anspruch 1, d a d u r c h   g e - k e n n z e i c h n e t , daß die Subbaugruppen (21) als Hybrid-Schaltungen auf einem plattenförmigen Keramiksubstrat angeordnet sind und durch Löt- oder Steckerstifte (22) elektrisch und mechanisch mit der Trägerplatte (19) verbunden sind.

3. Anordnung nach Anspruch 1 oder 2, d a d u r c h   g e - k e n n z e i c h n e t, daß die Indikationsschaltung (15, 16) ebenfalls auf einer Subbaugruppe (23) angeordnet ist, die austauschbar mit der Grundplatte (19) verbunden ist.

FIG 1

FIG 2

FIG 3

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | THE INTERNATIONAL SYMPOSIUM ON SUBSCRIBER LOOPS AND SERVICES, 20.-24. März 1978, Seiten 182-184 Atlanta, U.S.A. J.R. SERGO: "DSS Quad line circuit"  * Gesamter Artikel *  -- | 1-3 | H 04 Q 11/04 H 04 Q 1/02 |
| | NTC '77 CONFERENCE RECORD, Band 3, Dezember 1977, Seiten 39:5-1 - 39:5-7 New York, U.S.A. C.G. SVALA: "DSS-1, A digital local switching system with remote line switches"  * Seite 39:5-3, linke Spalte, Zeile 41 - rechte Spalte, Zeile 15; Seite 39:5-4, rechte Spalte, Zeile 1 - Seite 39:5-5, rechte Spalte, Zeile 35 *  -- | 1,3 | RECHERCHIERTE SACHGEBIETE (Int. Cl. 3)  H 04 Q 11/04 H 01 L 23/54 H 04 Q H 04 M H 04 Q 1/02 H 01 L 25/16 |
| | 1978 INTERNATIONAL ZURICH SEMINAR ON DIGITAL COMMUNICATIONS, März 1978, Seiten C6.1 - C6.6 Zürich, CH. R. ISRAEL et al.: "Subscriber line equipment techniques"  * Seiten C6.2 und C6.3; Paragraphen 3,4 *  -- | 1 | |
| | 1978 INTERNATIONAL ZURICH SEMINAR ON DIGITAL COMMUNICATIONS, März 1978, Seiten A2.1 - A2.5 Zürich, CH. G. WHITE: "Options and progress in digital local switching"  * Seite A2.4, linke Spalte, Zeile 15 - rechte Spalte, Zeile 29 * ./. | 1 | KATEGORIE DER GENANNTEN DOKUMENTE  X: von besonderer Bedeutung A: technologischer Hintergrund O: nichtschriftliche Offenbarung P: Zwischenliteratur T: der Erfindung zugrunde liegende Theorien oder Grundsätze E: kollidierende Anmeldung D: in der Anmeldung angeführtes Dokument L: aus andern Gründen angeführtes Dokument &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 12-10-1979 | DE MUYT |

EPA form 1503.1  06.78

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | CONFERENCE RECORD 1978 INTERNATIONAL CONFERENCE ON COMMUNICATIONS, Band 3, Juni 1978, Seiten 37.2.1 - 37.2.5 Toronto, CA. A. MORIDERA et al.: "Fetex digital switching system for central office" <br><br> * Seite 37.2.3, Paragraph 2.2.5; Seite 37.2.5, Paragraph 3.2.4 * <br><br> -- | 1,3 | |
| | IEEE TRANSACTIONS ON PARTS, HYBRIDS AND PACKAGING, Band PHP-8, Juni 1972, Seiten 51-58 New York, U.S.A. W.H. ORR et al.: "Thin film hybrid integrated circuits for communication systems" <br><br> * Seite 51, "Summary"; Seite 52, Bild 3 * <br><br> -- | 1,2 | RECHERCHIERTE SACHGEBIETE (Int. Cl. 3) |
| | IBM TECHNICAL DISCLOSURE BULLETIN, Band 20, Heft 9, Februar 1978, Seiten 3399,3400 New York, U.S.A. R.W. GEDNEY et al.: "Low-cost integrated circuit" <br><br> * Gesamter Artikel * <br><br> -- | 1-3 | |
| | WESCON CONFERENCE RECORD, September 1977, Seiten 15/3-1 - 15/3-7 New York, U.S.A. M.L. BURCH et al.: "Ceramic chip carrier - the new standard in packaging" <br><br> * Gesamter Artikel * <br><br> -- ./. | 1-3 | |

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| P | TELECOM REPORT, Band 2, Heft 3, März 1979, Seiten 174-183 München, DE. H. SUCKFULL: "Architektur einer neuen Linie digitaler öffentlicher Fernsprechvermittlungen" <br><br> * Seite 175, letzter Paragraph; Seite 176, linke Spalte, Zeilen 1-39; Bild 4 * <br><br> -- | 1 |
| A | INTERNATIONAL SWITCHING SYMPOSIUM, Oktober 1976, Seiten 423-3-1 - 432-3-8 Kyoto, JP. Y. KUMASHIRO et al.: "KC 260 EPABX A small sized stored program controlled electronic switching system" <br><br> * Seite 432-3-4, Paragraph 5 * <br><br> -- | 1 |
| A | BELL LABORATORIES RECORD, Band 54, Heft 2, Februar 1976, Seiten 34-38 New York, U.S.A. J.G. CHEVALIER et al.: "Packaging electronic circuits for the future" <br><br> * Gesamter Artikel * <br><br> ---- | 1,2 |

**KLASSIFIKATION DER ANMELDUNG (Int.Cl. 3)**

**RECHERCHIERTE SACHGEBIETE (Int. Cl. 3)**